Europäisches Patentamt

European Patent Office

Office européen des brevets

(19)

(11) Publication number: 0 383 459
A2

## (12) EUROPEAN PATENT APPLICATION

(21) Application number: 90301064.3

(22) Date of filing: 01.02.90

(51) Int. Cl.5: G01N 27/26, G01N 1/00

(30) Priority: 14.02.89 US 311325

(43) Date of publication of application:
22.08.90 Bulletin 90/34

(84) Designated Contracting States:
CH DE FR GB IT LI SE

(71) Applicant: BECKMAN INSTRUMENTS, INC.
2500 Harbor Boulevard Box 3100
Fullerton California 92634-3100(US)

(72) Inventor: Burolla, Victor Paul
1322 Shawnee Road
Livermore, California 94550(US)

(74) Representative: Fitzpatrick, Alan James et al
Fitzpatricks 4 West Regent Street
Glasgow G2 1RS Scotland(GB)

(54) Automated capillary injector.

(57) A pressure integrated apparatus and process for the measured injection of sample into a capillary for electrophoresis is disclosed. Preferably the capillary is mounted in a serpentine path to a cartridge body having a bottom. The capillary, previously filled with electrolyte depends a distance below the bottom of the cartridge and has its periphery sealed to the cartridge. Typically, the cartridge is registered at the depending capillary to a vial of sample. The vial of sample is moved into substantial gas tight relation with the cartridge so that the depending capillary is below the surface of liquid within the sample vial. The vial is then communicated to a source of substantially constant fluid pressure in the order of 1 lb./inch$^2$. At the same time, a pressure gauge monitors the pressure of the vial and outputs a signal to integration apparatus such as a microprocessor. By time integration of the area under a pressure curve, precise monitoring of the amount of fluid introduced into a capillary occurs. Assuming a total capillary capacity of several microliters, injections of sample in the order of 5 nanoliters with an accuracy of plus or minus 2% is possible.

In one embodiment, a reusable vial cap is provided with four resiliently deflectable flaps surrounded by an integral O-ring sealing region. The cap can cooperate with downwardly dependent fingers on a lever arm to make an opening for insertion of a capillary and electrode.

FIG._9B.

EP 0 383 459 A2

## AUTOMATED CAPILLARY INJECTOR

The application is a continuation-in-part of U.S. application Serial No. 187,760, filed April 29, 1988.

## BACKGROUND OF THE INVENTION

This invention relates to electrophoresis. More particularly in capillary electrophoresis an injection technique is disclosed for injecting sample to a capillary, the capillary preferably being held within a cartridge.

## SUMMARY OF THE PRIOR ART

Capillary electrophoresis is known. Typically a capillary (in the order of 50 microns inside diameter) is filled with electrolyte. The width of the capillary is 350 microns outside diameter. The length of the capillary is from 20 to 100 cm. Consequently it has a total volume in the order of 1 to 2 microliters. Needless to say, the capillary is fragile.

The capillary is initially filled with electrolyte. Sample must be accurately injected in small amounts for the required analysis by electrophoresis.

The injection of sample to a capillary has not been without problems in the prior art.

First, electric potential across the capillary has been used for the injection of sample. In this process an electropotential is placed across the capillary. One end of the capillary is immersed in a vial of liquid sample. The other end of the capillary is immersed in a vial of electrolyte. The required electric potential is applied between vials to produce voltage differential between the distal ends of the capillary. Sample is drawn into the capillary.

Unfortunately in utilizing this technique, the sample becomes subject to classification on injection. That is to say, the very forces which are being utilized to draw the sample into the capillary are the same forces which cause classification of the sample once it is in the capillary. Utilizing electropotential as a drawing method results in certain substances being drawn into the capillary more quickly than others, thus, there is no way to obtain precise purity of a sample which is drawn into the capillary by electropotential means.

The drawing or siphoning of a sample to a capillary is not without difficulty. Simply stated, one can never be sure with exactitude the amount of sample entered into the capillary.

The transfer of chromatographic techniques, especially those techniques used from high performance liquid chromatography (so-called "HPLC") is not appropriate. Typically, the volumes processed in the capillary electrophoresis are less than 1/1,000ths of those volumes utilized in high performance liquid chromatography. Consequently, sample vials for the positive displacement trapping and thereafter injection of volumes of sample are too large to be effectively utilized with electrophoresis.

## SUMMARY OF THE INVENTION

A pressure integrated apparatus and process for the measured injection of sample into a capillary for electrophoresis is disclosed. Preferably the capillary is mounted in a serpentine path to a cartridge body having a bottom. The capillary, previously filled with electrolyte depends a distance below the bottom of the cartridge and has its periphery sealed to the cartridge. Typically, the cartridge is registered at the depending capillary to a vial of sample. The vial of sample is moved into substantial gas tight relation with the cartridge so that the depending capillary is below the surface of liquid within the sample vial.

The vial is then communicated to a source of substantially constant fluid pressure in the order of 1 lb./inch². At the same time, a pressure gauge monitors the pressure of the vial and outputs a signal to integration apparatus such as a microprocessor. By time integration of the area under a pressure curve, precise monitoring of the amount of fluid introduced into a capillary occurs. Assuming a total capillary capacity of several microliters, injections of sample in the order of five nanoliters with an accuracy of plus or minus 2% is possible.

Other Objects, Features and Advantages

An object to this invention is to disclose a simple and volumetrically accurate method for the injection of sample to an electrolyte filled capillary in preparation for electrophoresis. Typically, the capillary depends downward from the bottom of a cartridge body. The capillary is sealed at its perimeter to the cartridge body. The capillary, already flooded with electrolyte, is immersed in a sample containing vial. The vial is confronted and sealed substantially air tight to the bottom of the cartridge around the capillary. Pressure is supplied to the capillary from a substantially constant pressure source -- in the range of 1 psi. Fluid is injected to the capillary.

An advantage of this method and apparatus for pressure injection is that the capillary when held by the cartridge is uniquely positioned for sample injection. By the expedient of knowing the pressure and measuring the time exposure of the capillary to the pressure, the amount of sample can be accurately determined.

A further object of the invention is to disclose apparatus for the precision measurement of injected sample. According to this aspect of the invention, the pressure within the sample vial is closely monitored by a pressure transducer. The pressure transducer outputs to an integration device, such as a microprocessor. By the expedient of integrating the area under the pressure curve with respect to time, the volume of sample injected can be accurately measured.

An advantage of this aspect to the apparatus and process is that high accuracy of the injection technique can be achieved. At the same time, very small amounts of sample can be injected. In sample injections of the magnitude of five nanoliters, into a cartridge containing several microliters, reproducible results of the sample injection in the range of plus or minus 2% have been achieved!

A further advantage of the injection technique is that the reliance on a perfect seal between the vial and the capillary is not required. Where slow -- but relatively constant -- leaks change the pressure in the sample vial from which sample injection occurs, the integration is capable of preserving accurate measurement. Simply stated, by knowing accurately the pressure of the vial, adjustments to the integration can be made to vary the time exposure of the capillary to the extant sample.

An advantage of this aspect of the invention is that the integration can be adjusted for nonlinearities encountered. For example, when the sample is initially pressurized, flow into the capillary will not be linear with pressure. Likewise, when the sample is depressurized at the end of sample injection, nonlinearities and flow rate will likewise be encountered. Specifically, these nonlinearities can be tailored in the integration. Further, the nonlinearities can be adjusted to the particular pressure which happens to be present when the sample is injected.

An additional advantage of this aspect of the invention is that adjustment can easily be made for the viscosity of the sample.

Yet another object to this invention is to disclose an automated sequence for sample injection to a cartridge mounted capillary. A vial having a sample therein covered by septum. A lever arm having paired hypodermics is registered underlying the depending capillary and overlying the septum of the vial. When the vial is first moved upwardly, piercing of the septum at the hypodermics first occurs. Thereafter, the lever arm is forced between the vial and the overlying cartridge to register to a block having paired O-ring seals between the cartridge at the upper end and the lever arm around the hypodermics at the lower end. During the full upward movement of the vial, the capillary passes through one of the hypodermics into the sample containing the vial. When full upward movement of the vial has occurred, a seal between the cartridge, block and lever arm has occurred at the O-rings while a seal to the vial at the hypodermics piercing the septum has occurred. By the expedient of automated threading of the capillary through one of the hypodermics and into and below the level of liquid sample in one of the vials, the pressure injection of sample into the vial can occur on an automated basis.

An advantage of this aspect of the invention is for the first time sample injection in a capillary electrophoresis application can be completely automated to a high degree of accuracy.

In another embodiment, a vial cap having downwardly movable resilient flaps is provided. The flaps are surrounded by an O-ring sealing structure. In this embodiment, the lever arm has downwardly depending fingers, rather than hypodermics. The fingers move the flaps downward to form an opening for insertion of the capillary and/or electrode. The O-ring forms a seal with the lever arm to permit vial pressurization. This embodiment also provides for automated sampling, and further permits reuse or resampling of the vial.

BRIEF DESCRIPTION OF THE DRAWINGS

Other objects, features and advantages of this invention will become more apparent after referring to the following specification and attached drawings in which:

Fig. 1A is a perspective view of a cartridge having an interior volume of the introduction of coolant with the cover removed so that the full detail of the capillary path in the interior of the cartridge can be seen;

Fig. 1B is a perspective view of the rear side of the cartridge of Fig. 1A with the detail of the detector aperture being made clear;

Fig. 2 is an exploded view of a table having sample vials, the vials being moved to and from by pistons to positions of sealing registration to an overlying cartridge for electrophoresis;

Fig. 3 is a top plan view of the apparatus of Fig. 2 illustrating sample vials contained in overlying and underlying concentric rings, the rings being utilized to register the sample vials to appropriate position with respect to the cartridge;

Fig. 4 is a detail adjacent the sample cartridge illustrating the registration of the vial to a capillary with pressure injection occurring;

Fig. 5 is a graphic illustrating the integration of an injection with respect to time, this integration illustrating leading and trailing nonlinearities which are adjusted for the ambient pressure on the vial.

Figs. 6A-6C are a cartoon schematic series of a lever mounted hypodermic shown overlying a cartridge and depending capillary with Fig. 6A illustrating the assembly in a position of initial registry, Fig. 6B illustrating piercing of the septum sealing the cartridge by the hypodermic, and Fig. 6C showing the capillary penetrating the sample vial for the loading of sample in accordance with this invention; and,

Fig. 7 is a cross-sectional view along line 7-7 of Fig. 6A;

Fig. 8A is a perspective view of a vial cap according to the present invention;

Fig. 8B is a cross-sectional view taken along line 8B-8B of Fig. 8A;

Fig. 9A is a cross-sectional view generally corresponding to the view of Fig. 7, but depicting another embodiment of the present invention;

Fig. 9B is a cross-sectional view corresponding to Fig. 9A, but with the vial, lever arm, and block being adjacent; and

Fig. 10 is a bottom perspective view of a lever arm of the embodiment depicted in Figs. 9A and 9B.

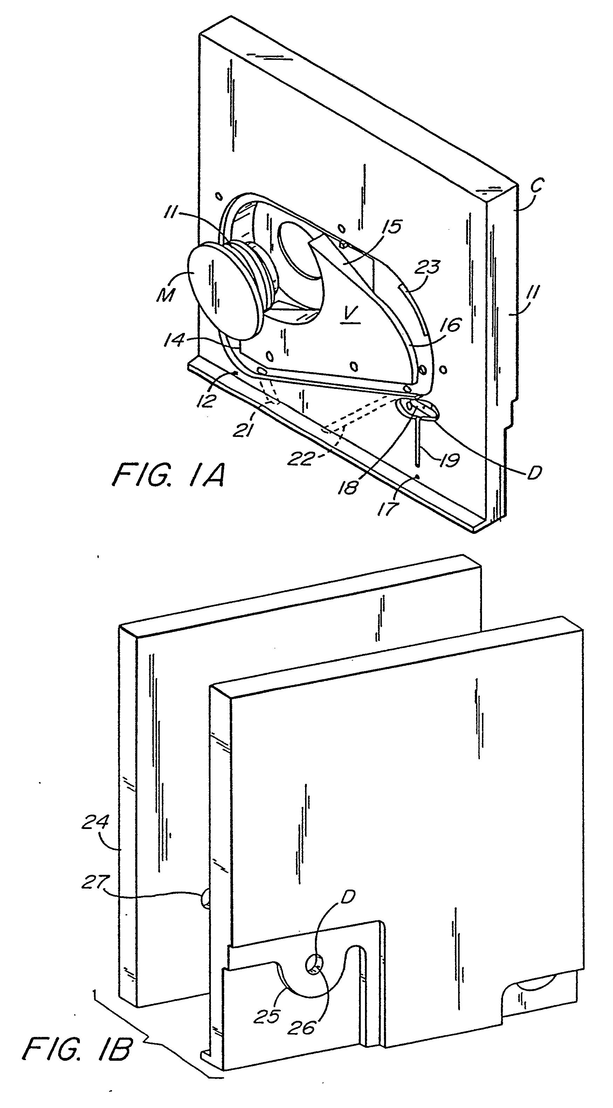

Referring to Fig. 1A, the interior of a cartridge C is set forth. Cartridge C defines an interior volume V, which volume V contains coolant during cartridge confined electrophoresis.

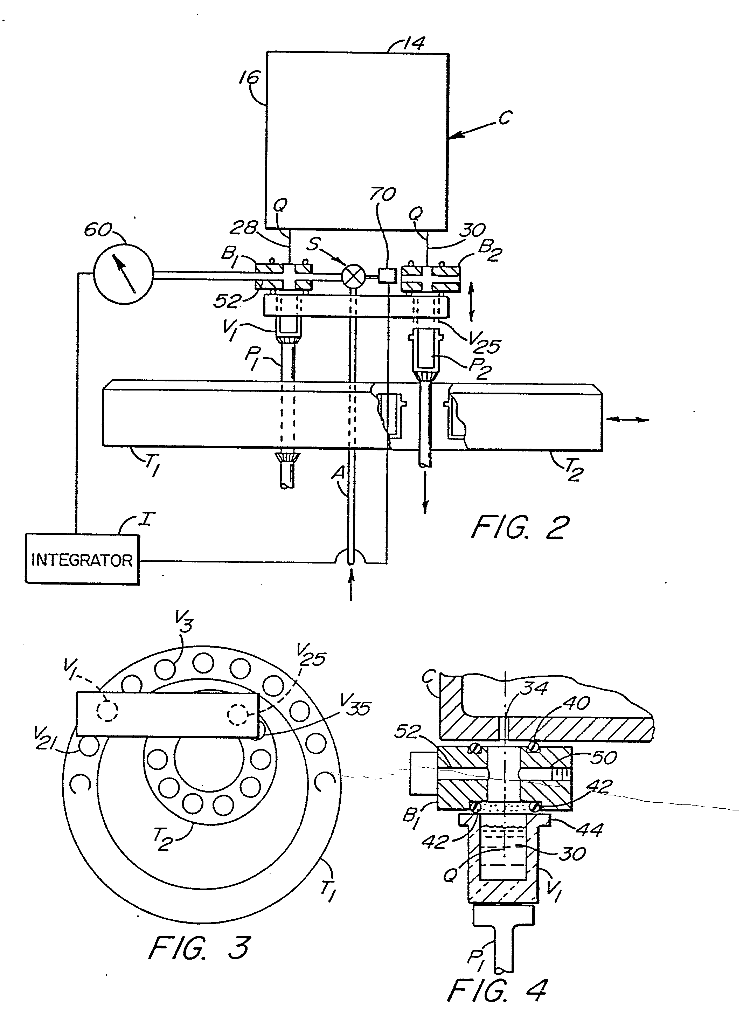

Capillary Q, best seen in Fig. 2, is initially threaded through aperture 12 and passed a sufficient number of times around a mandrel M having helical threads 11. Threads 11 are given sufficient depth and spacing so that remote parts of the capillary do not make electric contact or arc through the capillary during the electrophoretic process. As illustrated in the exploded perspective of Fig. 1A, the mandrel is first wound and thereafter inserted interior of the volume V in the cartridge C.

The capillary Q typically is aligned along vertical surface 14 to the first wind around mandrel M. After the requisite number of turns to accommodate the intended length of the capillary, the capillary passes over exit surface 15. At this surface the capillary gradually turns vertically downward departing exit surface 15 at point 16. Thereafter, the capillary passes across the detector aperture D, along a vertical exit passage 19 and finally through an exit aperture 17. The capillary Q is registered to a bar 18 within detector D, this bar having a small central aperture for the passage of light. As will hereinafter be set forth, passage of the light through the cartridge C at detector D allows the classified components to be identified.

Assuming that the capillary is completely threaded interior of the cartridge C, an O-ring is thereafter threaded completely around the interior of the volume V. This O-ring in passing over the capillary Q, traps the capillary in place.

Once the O-ring is in place, a cover 24 is placed over and sealed in position, enclosing the cartridge.

Turning to the view of Fig. lB, the rear surface of the cartridge can be seen and understood. Detector D has a concentric and essentially circular gathering surface 25 for aligning optics to the aperture 26. Similarly, plate 24 has a similar aperture 27. Thus, when plate 24 closes the cartridge, light can pass through the cartridge and through the capillary Q for required detection of classified "bands" of like particles.

With the exception of the indentation of the cartridge to define gathering surface 25, the rear of the cartridge is essentially rectilinear.

A word relating to two conduits 21 and 22 shown in broken lines in Fig. 1A. These conduits 21 and 22 are for the entry and exit of cooling fluid used during the electrophoresis within the cartridge C. It can be seen that the conduits start at the bottom surface of cartridge C and extend into the volume V. Thus, before the electric potential is placed across the distal ends of the capillary Q, the entire volume of the cartridge C can be flooded with coolant. Likewise, and immediately before cartridges are removed, draining of the inner volume V can likewise occur.

Immediately before block 24 closes cartridge C, capillary Q has sealant placed on apertures 12 and 17. Such sealant, preferably a silicon rubber compound, effects a sealing of the periphery of the capillary Q to the cartridge C. As will hereafter become more apparent, this sealing enables fluid to be forced under pressure up the interior of the capillary Q.

Referring to Figs. 2 and 3 the sample injection apparatus of this invention is schematically illustrated. Specifically and referring to Fig. 3, an outer concentric table T1 and an inner concentric table T2 contain a series of vials. Vials VI-V24 are contained at 24 spaced apart angular intervals about circular outer concentric table T1. Vials V25 through V35 are contained in the inner concentric table T2. As illustrated in both Figs. 2 and Figs. 4, vials VI and V25 are respectively registered under a cartridge C.

Registry of cartridge C to the respective tables is easy to understand. Capillary Q interior of cartridge not only occupies the serpentine path previously described but depends at respective distal ends 28 and 30 from the bottom of the cartridge. It is these distal ends 28 and 30 which penetrate into and receive sample from the vials.

As will hereinafter be more fully set forth, end 28 depends into vial V1 and receives sample from that vial. At that same time, and in order to equilibrate pressure flow across the capillary, end 3u penetrates into vial 25. Unlike vial V1, vial 25 fluidly communicates with atmosphere. Thus any flow rate into the capillary Q will be dependent upon pressure placed on the sample in vial V1.

Once vials V1 and V25 are registered underlying the distal ends 28, 30 of the capillary Q depending from cartridge C, respective pistons P1 and P2 lift the vials V1 and V2 from their respective tables T1 and T2. The vials are lifted until they register with blocks B1 and B2. Further lifting occurs from the diagram of Fig. 4 until the respective blocks B1 and B2 register to the bottom of the cartridge C. This registry can best be understood with respect to Fig. 4.

Referring to Fig. 4, vial V1 is illustrated, urged upwardly by piston P1. Vial V1 contains a sample 30. It is the purpose of this invention to inject sample 30 into the capillary Q which capillary has already been filled by electrolyte.

A block B is intermediate the cartridge C and the vial V. The purpose of block B1 can be discussed first. Its construction will thereafter easily follow.

The purpose of block B1 is to permit a pressure seal of the vial V with respect to the cartridge C. Typically, capillary Q is sealed at seal 34 at the point where it depends from the cartridge C. Such sealing occurs around the periphery of the capillary C.

The reader can simply understand what happens when fluid under pressure is introduced at the bottom of the capillary. Typically, the pressure will cause fluid to flow into the capillary.

It is also known that the precise rate of flow into the capillary will be a function of the pressure and the time it is applied.

It will be understood that capillary C is very small. For example, capillary C can be in the order of 50 microns inside diameter. The outside diameter of the capillary C will be on the order of 500 microns. Assuming that the capillary is in the order of 100 cm long, a volume in the order of 1 to 2 microliters will constitute the entire volume of the capillary. Typically, and in preparation for electrophoresis, the capillary is filled with electrolyte.

It is the purpose of the injection herein disclosed to inject the volumes in the order of 5 or 10 nanoliters.

It will be seen that block B includes a first overlying set of O rings 40 and a second underlying set of O rings 42. When vial V is urged at and its flange 44 is moved into registry with O ring 42, a seal will occur.

Likewise, when O rings 40 are urged into contact with the bottom of the cartridge C another seal will occur.

Those skilled in the chemical arts will realize that the seals can be other than perfect. For example, the seal around the periphery 34 of the capillary Q at the cartridge can leak. Likewise, leakage can also occur at O rings 40, 44.

It has been experimentally determined that the leakage encountered in these environments is essentially constant. Thus, assuming that the interior of the vial V is subjected to a constant pressure source, the pressure within the vial V will quickly equilibrate to a constant pressure. It is the purpose of this invention to determine this pressure, integrate it with respect to time to determine the flow rate and to use the determined flow rate to precisely measure the volumes introduced into the capillary Q.

The construction of block B1 may now be set forth.

Referring to block B1, it has a first aperture 50. It is through aperture 50 that gas (preferably nitrogen) is introduced under constant pressure. Such introduction occurs only after the seals 40, 42 are registered respectively to the cartridge C and vial V1.

Aperture 52 is for the accurate measure of pressure interior of the vial V1. Specifically, by knowing precisely the pressure interior of the vial V1, accurate integration with respect to time of the pressure within the vial V can occur.

Returning to Fig. 2, the remaining apparatus can be seen. A pressure transducer 60 reads the pressure interior of conduit 52 on block B1. Pressure transducer 60 outputs a signal to integrator I.

Integrator I has an operative connection to a solenoid valve S through a solenoid 70. By the sequence of opening solenoid valve 70, integrating the pressure interior of the vial V1 with respect to time and closing the solenoid valve S responsive to a measured amount of sample, quantitative measure of sample injected to the capillary tube can be made.

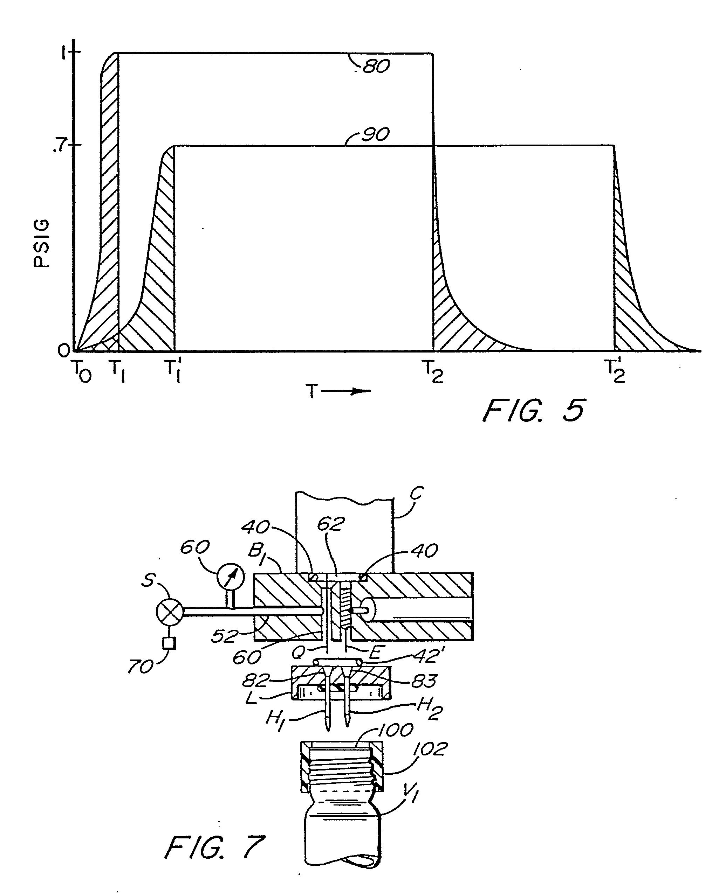

An operative example of this measurement will first be set forth and explained with respect to the graphical presentation of Fig. 5. Thereafter, and as a part of this application, the applicable computer programs utilized for the integration will be set forth. Finally, some attention will be directed to the non-linearity. The reader will understand that the combination of such nonlinearities may well have to be empirically established.

Referring to Fig. 5, a pressure time integration is disclosed. Assuming that solenoid valve S opens at $t_0$, pressure equilibration will take place in a time interval $t_0$-$t_1$. When full pressure is reached (here shown in the range of 1 psig), that pressure remains on the capillary until until time $t_2$. At time $t_2$, solenoid valve S will close.

As can be plainly seen, two nonlinearities are present. These nonlinearities are between time to and time $t_1$ and after time $t_2$. For the convenience of the viewer, the nonlinearities are shaded.

Simply stated, by integrating the area under the time pressure curve 80, one can precisely determine the flow rate.

Referring to the nonlinearities, their value will be empirical. They will vary as the pressure rate on the valve V vary. Reference to a second curve 90 is instructive.

Referring to second curve 90 it is assumed that the seals between the vial V1 and the ambient are not as perfect. Consequently the pressure shown rises to approximately 7/10ths of a psi.

Consequently, and in order to realize the same area under curve 90 as is present under curve 80, the time of the exposure to pressure is prolonged. Specifically, valve to opens and closes at a much later time $t'_2$.

Additionally, the nonlinearities will change. Specifically, the nonlinearity between the time $t_0$ and time $t'_1$ when vial V realizes a constant pressure will have changed. Likewise, the nonlinearity present after $t'_2$ will likewise have changed.

The reader will understand that other non-linearities can change the function of this equation. For example, sample viscosity can be such a factor. Temperature of the sample can likewise effect flow rate. Appropriate adjustment can be made by those skilled in the art.

The implementation of this discovery is relatively simple. Pressure transducer 60 is a transducer manufactured by the Fujikura company of Japan.

Integrator I constitutes a microprocessor manufactured by the Motorola of Sunnyvale, California and sold under the designation "68000".

A program written in language "C" for operating the integrator is disclosed in Table I. A compiler for the language "C" is utilized. This compiler may be obtained from Manx Software Systems of Shresbury, New Jersey and is sold under the trademark "AZTEC". This program can be altered to suit the particular integrator utilized.

TABLE I

```
#include "datastr.h"

press ( )

{

        int i;

        int tenths;

        int hdrds;

        double area_sum;

        double prev_pressure;

        double pressure;

        double total_time;

        double readpress( );
```

```
total_time = (double) atoi( ppressstr.time );

total_time = total_time / 1Ø - TAIL;

tenths = O;

hdrds = Ø;




area_sum = Ø.Ø;

prev_pressure = Ø.Ø;




S-inj( );

display( 1, " Ø.Ø " );

do {

    delay1ØØ(1);

    hdrds++;

    pressure = readpress( );

    area_sum = area_sum + Ø.Ø1 * prev_pressure + Ø.5 *

                        ( Ø.Ø1 * ( pressure - prev_pressure ) );
```

```
          prev_pressure = pressure;

          if( hdrds == 1Ø ) {

               tenths++;

               dispsec( tenths );

               hdrds = Ø;

          }

          if( stopflg ) {

               break;

          }

     } while( area_sum + Ø.ØØ5 > total_time >

     injrinseoff( );


     if( !stopflg ) {

          for( i = Ø; i < (int) ( TAIL * 1Ø ); i++ ) {

               delay( 1 );

               tenths++;

               dispsec( tenths );

          }

     }

}
```

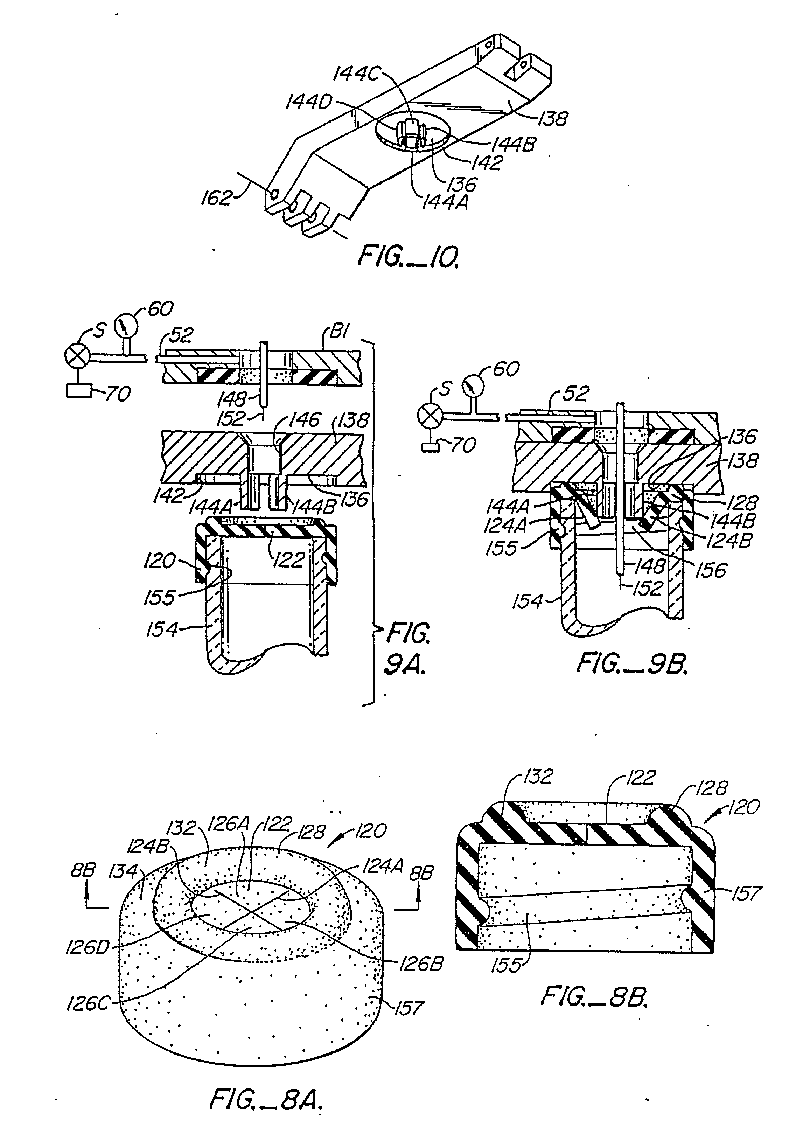

Referring to Fig. 7, an apparatus utilized with this invention to render the disclosure compatible with septum enclosed cartridges is set forth. A portion of cartridge C is shown conventionally overlying apparatus which is substantially the same as that illustrated with respect to Fig. 4. Block B1 is illustrated having a vertical channel 60 with an upper gathering frustum contoured aperture 62. This aperture gathers depending capillary Q and causes it to be centered as it depends through channel 60.

As previously illustrated, gas pressure is communicated interior of channel 60 through a gas channel 52. Gas is received from a solenoid valve S control by solenoid 70. Over the schematic of Fig. 4, a second vertical channel 72 with a depending electrode E has been added. As will be set forth immediately below, the electrode and the capillary are introduced through the septum of a sealed vial by a lever arm with two attached hypodermic needles. This scheme enables commercially available sealed vials to be utilized in the sample injection here set forth.

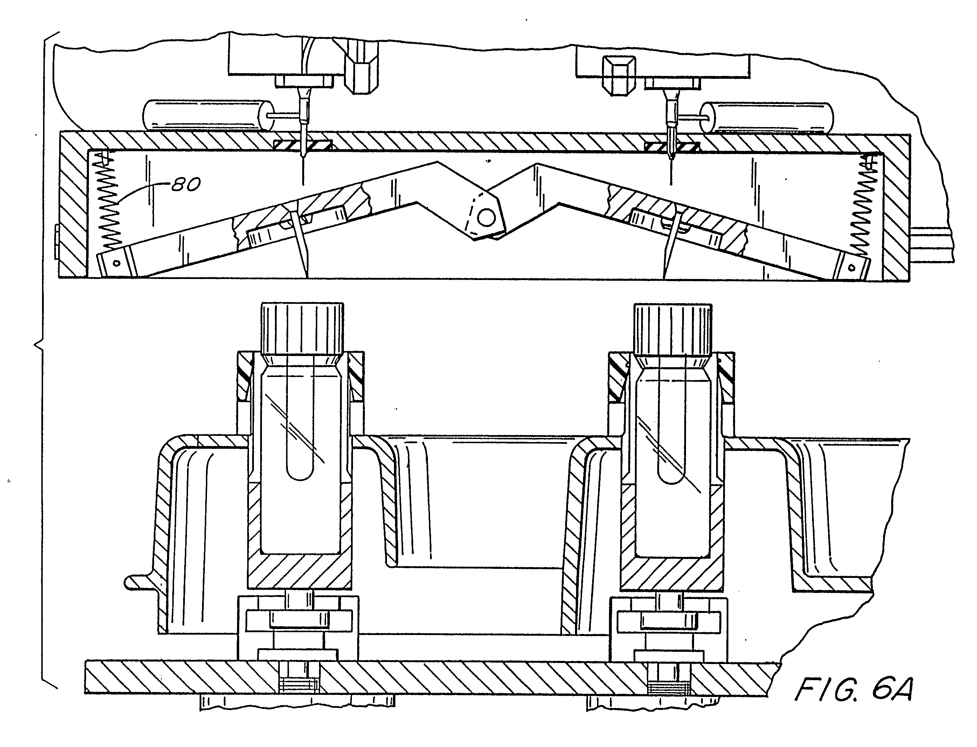

Referring to Fig. 6A, a left and right lever arm L is utilized. Lever arm L depends from the bottom of block B1 and is biased to the position shown in Fig. 6A by a spring 80. Two hypodermics H1 and H2, best seen in Fig. 7, each are attached to and depend on the bottom side of each lever arm L. In the view shown in Fig. 6A, one of each pair of hypodermics is positioned behind the other. These hypodermics are sized to be considerably larger than capillary Q and electrode E. It is by threading these hypodermics that capillary Q at its distal end makes entrance into the interior of vial V1.

The construction of the vial V1 -- which is typical of the remainder of the vials -- is easy to understand. Typically, vial is covered by a septum 100. Septum 100 is locked to the top of the vial by a cap 102. Septum is typically formed from a material that allows puncture by hypodermics H1 and H2.

Having set forth the construction of the apparatus with respect, operation can now be understood. Initially, and as illustrated in Fig. 6A, vial V1 is registered below the distal end of a depending capillary Q. Thereafter the vial V1 moves upwardly.

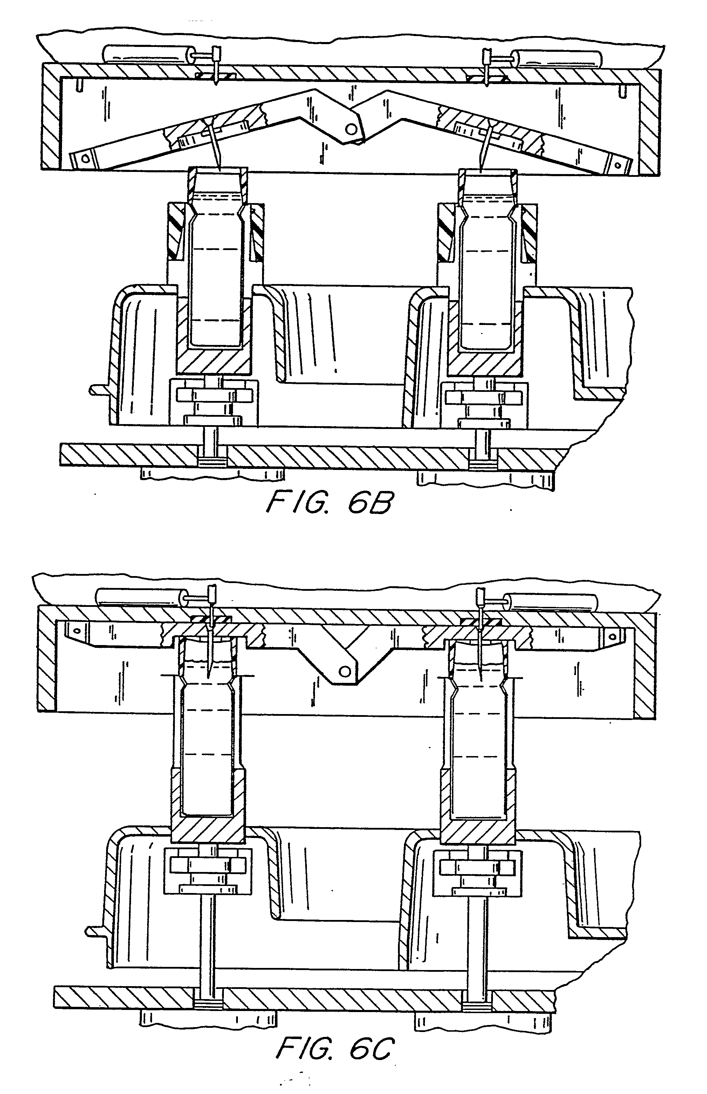

Upon such upward movement, hypodermics H1 and H2 pierce septum 100, as seen in Fig. 6B. Spring 80 is given sufficient force to prevent upward movement of level arm L until after piercing of the septum 100 has occurred.

Some attention can be given to the angle of penetration of hypodermic H through the septum.

Since it is required that the septums be threaded with electrodes or capillaries, their respective openings must be downwardly directed. That is to say, the hypodermics cannot open to the side.

This being the case, it will be seen that the hypodermics at first pierce the septums 100 with their beveled edges 106. Thereafter the beveled edge is drawn inwardly towards the pivot arm. Such motion tears the septum cap and prevent septum material displaced by the puncture form clogging the hypodermic.

Finally, and an illustrated in Fig. 6C, full upward movement of lever arm L registers O-ring seals 40 and 42' to the lever arm L and the bottom of cartridge C, respectively. Such registration effects the seal previously described.

After a seal has been established, the vial V1 is pressurized as described above to provide the desired amount of fluid in the capillary. A similar seal is made with a vial V25 in the inner concentric Table T2 depicted in Fig. 3. Subsequently, using the electrode 72 immersed in the vial V1, in combination with a second electrode immersed in the vial 25 which is in communication with the distal end of the capillary, an electric potential is established between the distal ends of the capillary Q which results in the electrophoretic classification of the sample which has been drawn into the capillary Q. The electrophoretically classified sample is then optically scanned, as described above.

It will thus be seen that with the apparatus operated in the sequence of Figs. 6A - 6C, that the disclosed apparatus and process is capable of automation for the injection of sample to a high degree of accuracy.

According to another embodiment of the invention, an apparatus and method for sampling is provided, such that sample-containing vials can be reused. Reuse of vials is useful either for measuring the same sample or for containing a different sample for measurement. Some configurations of vials are susceptible to leaking when they are reused. For example, when a vial with a septum, e.g., as in Fig. 7, is reused, it is subject to leakage through the previously-made puncture holes. Although the method and apparatus are generally tolerant of same amount of leakage, it is preferred to minimize or eliminate sources of leakage to the extent feasible.

According to this embodiment of the invention, a vial is provided with a covering, such as a cap, having two regions. The first region is a sampling region for insertion of sampling apparatus, such as a capillary and/or an electrode, into the vial. The second region is a sealing region substantially surrounding the first region.

Referring now to Fig. 8A, a cap 120 is provided with a sampling region 122 through which the sampling apparatus can be inserted into the vial. Although it is possible to provide for a puncturable sampling region, the sample region preferably contains resiliently deflectable flaps. The flaps can be pushed downwardly to provide an opening through which a sampling apparatus can be inserted. As seen in Fig. 8A, two crossing slits 124A, 124B are formed in the cap, defining four substantially triangular flaps 126A, 126B, 126C, 126D. The slits 124 extend through the thickness of the cap to permit downward deflection, as described more fully below. The flaps 126 can be made of any resiliently deflectable, material. Preferably, rubber is used.

Substantially surrounding the sample area 122 is a sealing region 128. The sealing region 128 can be in any configuration which will cooperate with the lever arm to effect a substantial seal between the lever arm and the interior of the vial. In one preferred embodiment, an annular rim 132, substantially in the shape of a portion of an O-ring, is provided, and projects upwardly from the upper exterior surface 134 of the cap 120. Although other configurations are feasible, the O-ring shape provides for ease of alignment of the sealing region with the corresponding seating region of the lever arm, as described below.

The material of the sealing region 128 can be any material effective to form a seal, as described more fully below. Preferably, the sealing region is formed of rubber. In the preferred embodiment, the entire cap 120 is integrally formed of rubber, as depicted in Fig. 8B. The flexibility of the rubber can be indicated by the durometer hardness scale, in which larger numbers correspond to harder or stiffer materials. The rubber preferably has a durometer value of about 50 to 60. The cap 120 can be made by any well known rubber forming process or procedure, such as pressing, molding, or the like.

The sealing region 128 cooperates with structures above the vial to provide a seal for effective pressurization of the vial with respect to the capillary. In the present embodiment, the O-ring 132 of the cap 120 cooperates with a seating region 136 in a lever arm 138, best seen in Fig. 10. The positioning and movement of the lever arm 138 is substantially similar to that described above in connection with the embodiment depicted in Figs. 6A-6C. However, the lever arm 138 of the present embodiment differs in several particulars.

A substantially flat surface region is provided against which the sealing region 128 of the cap 120 seats when the vial is brought into contact with the lever arm 138, as described more fully below. Preferably, the seating region 136 is defined by an annular, substantially flat surface. The seating region 136 surrounds devices (described below) for permitting access to the interior of the vial. The seating region 136 can be recessed to provide a shoulder 142 for defining the region in which the cap will be positioned.

One or more, preferably four, fingers 144A, 144B, 144C, 144D depend downwardly from the level arm 138 for pushing downward the four flaps 126 when they are brought into contact with the sampling region 122 of the cap 120. Interior to the seating region 16, and the fingers 144, are one or more conduits 146 for insertion of a capillary 148 and/or electrode 152, as described below.

Although the present embodiment is described in connection with a lever arm mechanism, the embodiment can be used in connection with configurations which do not employ a lever arm, such as the block configuration depicted in Fig. 4, or by providing for direct sealing of the vial to a portion of the cartridge.

The lever arm 138 can be made of any material capable of providing the desired seal and with sufficient structural integrity to support forces encountered during operation. Preferably, the lever arm 138 is integrally formed from a plastic material, such as by injection molding or the like.

Referring to Fig. 9A, the vial 154 is at least partially filled with a material to be sampled. A cap 120, such as that depicted in Fig 8A, is used to cover the open end of the vial 154, e.g., using screw threads 155 on the cap flange 157. The vial is positioned under the lever arm 138. The vial 154 is then moved into contact with the lever arm 138, such as by a plunger, as described above. As the fingers 144 contact the sampling region 122 of the cap, the fingers 144 force the flaps 124 to deflect downward, as depicted in Fig. 9B, thus providing an opening 156 in the cap.

Upon moving the vial 154 towards the lever arm 138, the sealing region 128 contacts the seating region 136 of the lever arm 138 to provide a substantial seal surrounding the sample region 122. The upward movement of the vial 154 causes the lever arm 138 to rotate about its axis 162, and bring the vial 154 adjacent to the capillary 148 and electrode 152. In this way, the capillary 148 and electrode 152 are inserted through the conduits 146 of the lever arm 138. The capillary 148 and electrode 152 are, in this manner, inserted into the vial 154, as depicted in Fig. 9B, to be partially submerged in the liquid being sampled.

Following the sampling procedure, as described above, the plunger is lowered. This allows the spring 80, seen in Fig. 6A, to move the lever arm 18 to its original position, as depicted in Fig. 9A. In this way, the capillary 148 and electrode 152 are withdrawn from the vial 154. Downward movement of the vial 154 causes the vial 154 to move away from the seating area 136 of the lever arm 138, breaking the seal, and permitting the flaps 124 to resiliently deflect upward to substantially their original positions.

Following the sampling procedure, the vial 154 can be repositioned adjacent to the lever arm 138, as described above. The vial can be provided either with the original contents of the vial or, after washing and refilling the vial, with a second sample. The vial 154 can then be moved upward for sampling the contents of the vial again. Because the sealing region 128 of the cap has not been substantially changed by the first sampling operation, it is effective to provide the desired seal during the second sampling operation. In this manner, the cap and the combination of the cap and vial are reusable.

As can be seen by the above description, a number of advantages are provided by the reusable configuration. By providing reusable caps 120, the contents of the vial 154 can be sampled or measured a number of times without the necessity of replacing the covering of the vial. The lever arm 138 can be provided without hypodermics or other potentially injurious or sharp objects. The lever arm 138 can be made of a single injection molded part, and thus provides for ease of construction and maintenance.

The present application relates to a covering for a receptacle adapted to be coupled to the opening of the receptacle and including a flexible membrane which may be deflected to allow access to the interior of the receptacle, and to a container comprising the combination of such a covering and receptacle. The invention is particularly suited for use with a sampling apparatus as described herein with reference to Figs. I to 7 of the drawings, which apparatus is the subject of co-pending European Patent Application No. 89302491.9 (0339781, published 2 November 1989).

## Claims

1. A cover for covering the opening of a receptacle comprising:
means for coupling to the opening of the receptacle; and
a flexible membrane deflectable to define an opening for external access into the interior of the receptacle.

2. A cover as in claim 1 wherein the membrane is divided into two or more deflectable flaps.

3. A cover as in any one of claims 1 and 2 wherein the membrane has crosscuts dividing the membrane into deflectable flaps of substantially equal size and shape.

4. A cover as in any one of the above claims further comprising an annular top portion surrounding the opening in the flexible membrane, the annular top portion being made of resilient material which when pressed against a flat surface form a seal between the surface and the cover.

5. A cover as in claim 4 wherein the annular portion is in the form of an annular ridge projecting from the top surface of the cover.

6. A container comprising:
a receptacle for holding a sample; and
a cover providing access to the interior of the receptacle, the cover having a flexible membrane deflectable to define an opening for inserting or withdrawing sample into or out of the receptacle.

7. A container as in claim 6 wherein the receptacle further comprising an annular top portion surrounding the opening in the flexible membrane, the annular top portion being made of resilient material which when pressed against a flat surface form a seal between the surface and the cap.

8. A container for use with a sampling apparatus which draws sample contained in the container using a sampling tube, the container comprising:
a receptacle for holding a sample; and
a cover providing access to the interior of the receptacle, the cover having a flexible membrane deflectable by the sampling tube to define an opening through which the sampling tube is inserted into the receptacle to draw the sample.

FIG. IA

FIG. IB

EP 0 383 459 A2

FIG. 2

FIG. 3

FIG. 4

INTEGRATOR

FIG. 5

FIG. 7

FIG. 6A

EP 0 383 459 A2

FIG. 6B

FIG. 6C

FIG.\_10.

FIG.
9A.

FIG.\_9B.

FIG.\_8A.

FIG.\_8B.